# EUROPÄISCHE PATENTSCHRIFT

(11) **EP 0 282 700 B1**
(45) Veröffentlichungstag und Bekanntmachung des Hinweises auf die Patenterteilung: **01.06.1994**
(21) Anmeldenummer: 88100905.4
(22) Anmeldetag: 22.01.1988
(51) Int. Cl.: B29C 67/14, B29C 31/00, B65G 47/91, B66C 1/02

(54) **Vorrichtung für den Transport von Klebrigen Prepreg-Zuschnitten**
Apparatus for conveying sticky preimpregnated webs
Dispositif pour le transport de nappes collantes de pré-imprégnés

(30) Priorität: 17.03.1987 DE 3708629
(43) Veröffentlichungstag der Anmeldung: 21.09.1988
(73) Patentinhaber: Maschinenfabrik J. Dieffenbacher GmbH & Co., D-75020 Eppingen (DE)
(72) Erfinder: Böke, Karl Heinz, D-4600 Dortmund 18 (DE); Orth, Heinz-Dietmar, D-4600 Dortmund 30 (DE); Schulz, Hans-Heinrich, D-4755 Holzwickede (DE)
(74) Vertreter: Hartdegen, Anton

(56) Entgegenhaltungen:
- EP-A- 0 120 291
- DE-A- 2 243 760
- DE-A- 3 018 082
- FR-A- 2 532 919
- US-A- 4 129 328
- US-A- 4 648 588

## Beschreibung

Die Erfindung bezieht sich auf eine Vorrichtung für den Transport von klebrigen Prepreg-Zuschnitten mit einem Saugkopf, einer Saugkopfaufhängung, einer Saugpumpe und einem Antrieb, der die Bewegung des Saugkopfes in vertikaler und horizontaler Richtung erzeugt, wobei der Saugkopf mehrere Saugeinheiten aufweist, die einzeln abgefedert sind.

Solche Vorrichtungen sind aus den DE-OS 22 43 760 und DE-OS 30 18 082 bekannt geworden, aber diese sind jedoch nicht geeignet für den Transport von klebrigen Prepreg-Zuschnitten.

Eine weitere Vorrichtung ist bekannt durch das Tagungshandbuch _{"} 13. Kunststofftechnisches Kolloquium des IKV in Aachen vom 05. bis 07. März 1986", Seiten 87 bis 89 mit Bildern 15 bis 20. Bei dieser bekannten Vorrichtung wird zum Ergreifen von klebrigen Prepreg-Zuschnitten ein Saugkopf mit Saugwaben aus Aluminium benutzt. Ein derartiger Saugkopf ist jedoch zum Ergreifen von klebrigen Prepreg-Zuschnitten mit stufenförmiger Oberfläche ebenfalls nicht geeignet.

Der Erfindung liegt die Aufgabe zugrunde, einen Saugkopf für eine Vorrichtung der eingangs genannten Art vorzuschlagen, der ein Ergreifen von klebrigen Prepreg-Zuschnitten mit stufenförmiger Oberfläche ermöglicht.

Erfindungsgemäß wird diese Aufgabe dadurch gelöst, daß der Saugkopf einen Saugkasten enthält, in dem eine Vielzahl von Saugeinheiten vertikal verschiebbar angebracht sind und daß jede Saugeinheit aus einer Rohrkupplung und einem darin gekuppelten aus Kunststoff gefertigten Saugröhrchen mit konischer Gleitfläche besteht. Zweckmäßigerweise sind dabei die Saugröhrchen durch je zwei Spannbacken, die mit zwei Federelementen in Wirkverbindng stehen, in den Rohrkupplungen auswechselbar gehalten.

Die Vorrichtung nach der Erfindung zeichnet sich gegenüber den bekannten Vorrichtungen dadurch aus, daß die vielen Zuleitungen der Saugvorrichtungen zu den einzelnen Saugköpfen wegfallen und einer leichten Auswechselbarkeit der Saugröhrchen aus den Rohrkupplungen. Ein Auswechseln und Reinigen der Saugröhrchen ist beim Transport von klebrigen Prepreg-Zuschnitten öfters notwendig, da die Ansaugöffnungen verschmutzen. Weiter ist als vorteilhaft anzusehen, daß die Vorrichtung gemäß der Erfindung wesentlich einfacher aufgebaut ist und mit weniger und einfacheren Bauteilen auskommt. Insgesamt ist damit eine einfachere Konstruktion erfunden, die wesentlich billiger herzustellen ist.

Im folgenden wird die Erfindung anhand einer Zeichung, in der ein Ausführungsbeispiel schematisch dargestellt ist, näher beschrieben.

Es zeigen :
- Fig. 1: eine Teilansicht einer Vorrichtung für den Transport eines aus klebrigen Prepreg-Zuschnitten gebildeten Stapels,

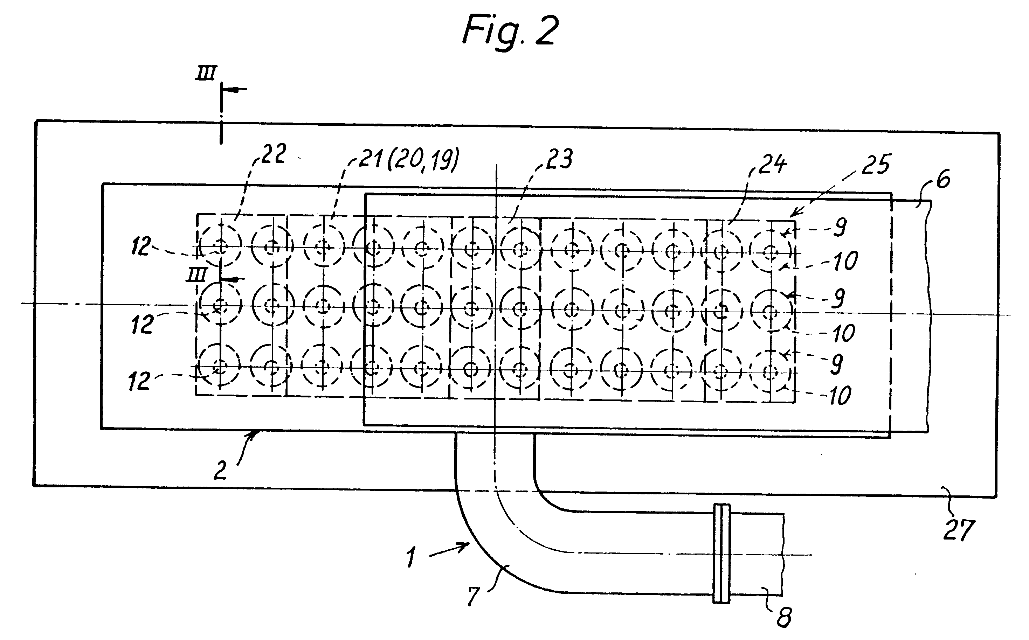

- Fig. 2: eine Teildraufsicht der Vorrichtung nach Fig. 1,

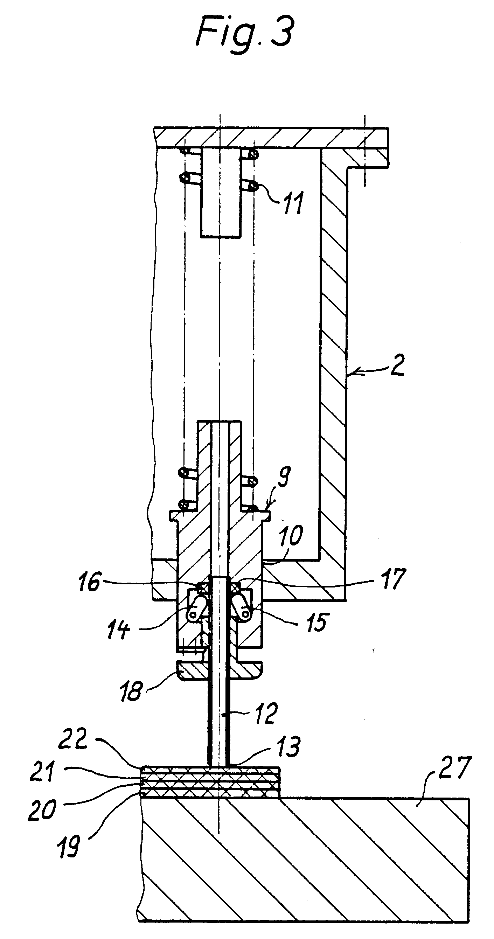

- Fig. 3: einen Teilschnitt entsprechend der Linie III-III in der Fig. 2 in vergrößertem Maßstab.

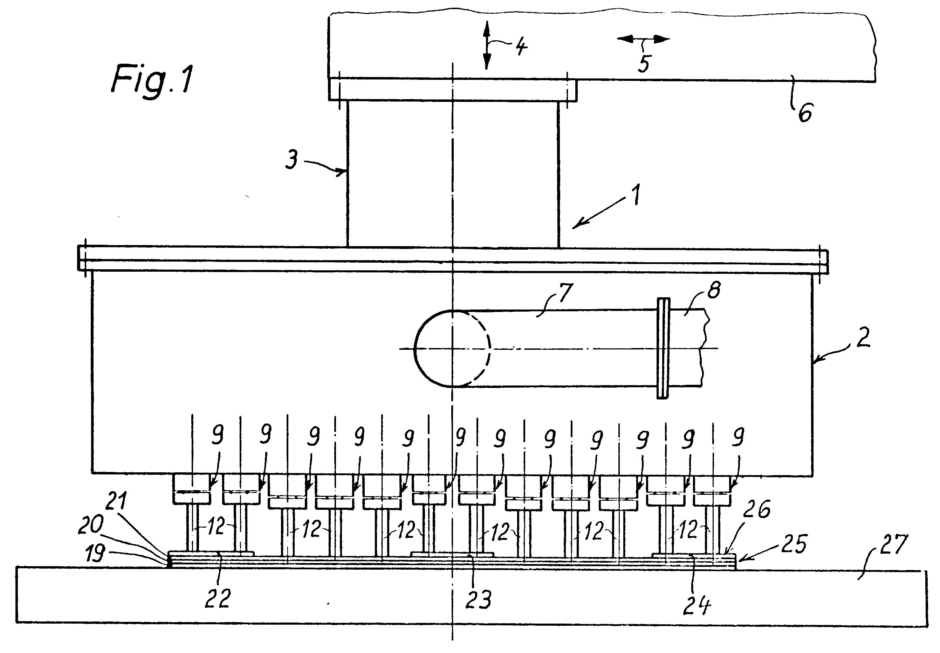

Ein Saugkopf 1 enthält einen Saugkasten 2, der mit einer Halterung 3 ausgeführt ist. Die Halterung 3 ist an einem in vertikaler (Doppelpfeil 4) und horizontaler Richtung (Doppelpfeil 5) bewegbaren Arm 6 befestigt. Zu dem Saugkopf 1 gehört ein Rohrstutzen 7, an den eine Saugleitung 8 mit einer Saugpumpe (nicht dargestellt) angeschlossen ist. Der Saugkasten 2 besitzt eine Vielzahl einzeln abgefederter Rohrkupplungen 9, von denen jede in einer Bohrung 10 in vertikaler Richtung (Doppelpfeil 4) verschiebbar ist. Zur Abfederung einer jeden Rohrkupplung 9 ist eine Druckfeder 11 mit schraubenförmigen Windungen vorgesehen. An jede Rohrkupplung 9 ist ein Saugröhrchen 12 aus Kunststoff gekuppelt. Jedes Saugröhrchen 12 weist eine konische Greiffläche 13 auf. Gehalten wird jedes Saugröhrchen 12 durch zwei Spannbacken 14 und 15, die mit zwei Federelementen 16 und 17 in Wirkverbindung stehen. Das Lösen der Spannbacken 14 und 15 wird erreicht durch Hochschieben einer Hülse 18 von Hand. In Figur 1 ist dargestellt, wie die Saugröhrchen 12 auf einen aus sechs klebrigen Prepreg-Zuschnitten 19, 20, 21, 22, 23 und 24 gebildeten Stapel 25 aufgesetzt sind. Hierbei üben die Saugröhrchen 12 eine Kraft auf den Stapel 25 aus, die sich aus der Druckkraft der Druckfedern 11 und der Gewichtskraft aus Rohrkupplungen 9, Saugröhrchen 12 und Druckfedern 11 ergibt. Die Anordnung der klebrigen Prepreg-Zuschnitte 19, 20, 21, 22, 23 und 24 zueinander, die im Ausführungsbeispiel eine stufenförmige Oberfläche 26 des Stapels 25 zur Folge hat, ist im wesentlichen abhängig von der Form des Preßteils. Bei den klebrigen Prepreg-Zuschnitten 19 bis 24 handelt es sich um Matten aus duroplastischem Kunststoff mit Glasfaserverstärkung (SMC). Während des Transports des Stapels 25 von einem Tisch 27 in eine Presse (nicht dargestellt) stehen der Saugkasten 2 und die Saugröhrchen 12 unter Vakuum. Die Rohrkupplungen 9 gewährleisten ein schnelles Auswechseln von mit Ablagerungen der Prepreg-Zuschnitte behafteten Saugröhrchen 12.

## Patentansprüche

1. Vorrichtung für den Transport von klebrigen Prepreg-Zuschnitten, mit einem Saugkopf, einer Saugkopfaufhängung, einer Saugpumpe und einem Antrieb, der die Bewegung des Saugkopfes in vertikaler und horizontaler Richtung erzeugt, wobei der Saugkopf mehrere Saugeinheiten aufweist, die einzeln abgefedert sind, **dadurch gekennzeichnet**, daß der Saugkopf (1) einen Saugkasten (2) enthält, in dem eine Vielzahl von Saugeinheiten (9 und 12) vertikal verschiebbar angebracht sind und daß jede Saugeinheit (9 und 12) aus einer Rohrkupplung (9) und einem darin gekuppelten aus Kunststoff gefertigten Saugröhrchen (12) mit konischer Gleitfläche besteht.

2. Vorrichtung nach Anspruch 1, **dadurch gekennzeichnet**, daß die Saugröhrchen (12) durch je zwei Spannbacken (14 und 15), die mit zwei Federelementen (16 und 17) in Wirkverbindung stehen, in den Rohrkupplungen (9) auswechselbar gehalten sind.

## Claims

1. An apparatus for transporting sticky prepreg blanks, having a suction head, a suction head suspension means, a suction pump and a drive which produces vertical and horizontal movement of the suction head, wherein the suction head has a plurality of suction units, which are sprung individually, characterised in that the suction head (1) contains a suction box (2) in which a plurality of suction units (9 and 12) is arranged in vertically displaceable manner, and that each suction unit (9 and 12) consists of a tube coupling (9) and a suction tube (12) coupled therein and made of plastics material and having a conical sliding surface.

2. An apparatus according to Claim 1, characterised in that the suction tubes (12) are held in the tube couplings (9) in such a way that they can be exchanged for each other, and are in operative communication with two spring elements (16 and 17), each by virtue of two clamping jaws (14 and 15).

## Revendications

1. Dispositif pour le transport de flans adhésifs de pré-imprégnés, comportant une tête d'aspiration, un support de tête d'aspiration, une pompe d'aspiration et un dispositif d'entraînement qui assure le déplacement de la tête d'aspiration dans les directions verticale et horizontale, la tête d'aspiration comportant plusieurs unités d'aspiration qui sont suspendues de manière individuelle, caractérisé par le fait que la tête d'aspiration (1) comprend une caisse aspirante (2) à l'intérieur de laquelle une pluralité d'unités d'aspiration (9 et 12) sont montées avec possibilité de déplacement dans la direction verticale et par le fait que chaque unité d'aspiration (9 et 12) se compose d'un raccord (9) et d'un petit tube d'aspiration (12) en matière plastique qui est monté dans ledit raccord et présente une surface de glissement conique.

2. Dispositif selon la revendication 1, caractérisé par le que les petits tubes (12) sont tenus avec possibilité de remplacement dans les raccords (9) chacun par deux joues de serrage (14 et 15) qui coopèrent avec deux ressorts (16 et 17).
